Europäisches Patentamt

European Patent Office

Office européen des brevets

(19)

(11) Publication number : **0 392 781 B1**

# EUROPEAN PATENT SPECIFICATION

(12)

(45) Date of publication of patent specification :
28.06.95 Bulletin 95/26

(51) Int. Cl.⁶ : **H04N 1/40**

(21) Application number : 90303795.0

(22) Date of filing : 09.04.90

(54) **Image processing apparatus.**

(30) Priority : **10.04.89 JP 90079/89**
**10.04.89 JP 90081/89**

(43) Date of publication of application :
**17.10.90 Bulletin 90/42**

(45) Publication of the grant of the patent :
**28.06.95 Bulletin 95/26**

(84) Designated Contracting States :
**DE FR GB IT NL**

(56) References cited :
PATENT ABSTRACTS OF JAPAN vol. 12, no.
447 (E-685) 24 November 1988, & JP-A-63
174472 (FUJI XEROX CO LTD) 18 July 1988,
PATENT ABSTRACTS OF JAPAN vol. 12, no.
425 (E-681) 10 November 1988, & JP-A-63
164570 (CANON INC) 07 July 1988,

(56) References cited :
PATENT ABSTRACTS OF JAPAN vol. 11, no.
304 (E-545) 03 October 1987, & JP-A-62 097474
(TOSHIBA CORP) 06 May1987
PATENT ABSTRACTS OF JAPAN vol. 13, no.
117 (E-731) 22 March 1989, & JP-A-63 288566
(CANON INC) 25 November 1988,

(73) Proprietor : **CANON KABUSHIKI KAISHA**
**30-2, 3-chome, Shimomaruko,**
**Ohta-ku**
**Tokyo (JP)**

(72) Inventor : **Ishida, Shinichi, C/o Canon**
**Kabushiki Kaisha**
**30-2, 3-chome,**
**Shimomaruko**
**Ohta-ku, Tokyo (JP)**

(74) Representative : **Beresford, Keith Denis Lewis**
**et al**
**BERESFORD & Co.**
**2-5 Warwick Court**
**High Holborn**
**London WC1R 5DJ (GB)**

## Description

## BACKGROUND OF THE INVENTION

### Field of the Invention

The present invention relates to an image processing apparatus for digitizing image data and, more particularly, to an image processing apparatus which can falsely reproduce an image in which characters and photographs mixedly exist.

### Related Background Art

Hitherto, in a digital copying apparatus, a digital facsimile apparatus, or the like, there has been known an apparatus in which image information is read from an original, the image data obtained is digitized to, for instance, the binary data, and the binary data is printed or is transmitted to a partner apparatus.

As a binarization processing method for digitizing image data into binary data, a simple binarizing process by using a fixed threshold value has generally been used in the case where an original is constructed by characters or diagrams, while a dither method has generally been used in the case where an original is a photograph.

When characters and photographs mixedly exist in an original, the simple binarizing process is executed to a character region of the original and the binarising process by the dither method is performed to a photograph region of the original, thereby improving the resolution of the character region and the gradation of the photograph region.

However, according to the above conventional example, there is a drawback such that when characters and photographs exist together in one original. In such a case the simple binarising process and the binarising process by the dither method must be switched in the original so that complications occur.

Therefore, as a binarising method whereby both of the high resolution and the high gradation can be realised for an original in which characters and photographs exist together, in recent years attention has been paid to a binarising method known as the concentration preservation type. An example of this is the article "An Adaptive Algorithm for Spatial Greyscale" by Robert W Floyd and Louis Steinberg published in the Proceedings of the S.I.D. Vol. 17/2 Second Quarter 1972.

The binarising method of the concentration preservation type intends to correct error data which is generated when the image data was binarised.

However, according to the known binarisation methods of the concentration preservation type, for instance, the error dispersion method, although good gradation can be regenerated in the half tone portion of an original, there is a drawback that there occurs a phenomenon in which particle-like noises are generated in the reproduced image in the highlight portion of the original or the reproduced image lacks as a white region in the dark portion of the original. Particularly, in facsimile apparatus, the encoding efficiency also deteriorates due to the generation of such noises.

On the other hand, there is also the drawback that even in the case where the character portion of the original was processed, edges are lacking and line continuations deteriorate although such phenomena are not so severe as in the dither method.

The Abstracts of Japanese Patent Specifications JP-A-62 097 474 and JP-A-63 174 472 both disclose image processing apparatus in which employ binarisation.

In accordance with the present invention there is provided an image processing apparatus comprising:

data converting means for converting luminance data of an image into density data;

mode selecting means for selecting a photograph mode or a character/photograph mode;

correcting means for correcting the density data on the basis of the mode selected by the selecting means; and

processing means which comprises binarising means for binarising the corrected density data on the basis of a predetermined threshold value and means for correcting error data which is generated upon binarisation;

characterised in that when the character/photograph mode is selected by said selecting means, said correcting means converts a plurality of levels of density data for a low density part in the density data from said data converting means into white data of lowest density and/or converts a plurality of levels of density data for a high density part in said density data into black data of highest density.

In order that the present invention may be more readily understood embodiments thereof will now be described by way of example and with reference to the accompanying drawings, in which:

Fig. 1 is a block diagram of a facsimile apparatus as an embodiment of the present invention;

Fig. 2 is a block diagram showing the details of a read unit in Fig 1;

Fig. 3 is a diagram showing an ROM to execute the luminance/density data conversion;

Fig. 4 is a diagram showing an input/output correspondence table of a luminance/density data conversion circuit;

Fig. 5 is a diagram showing an ROM to execute the density correction;

Fig. 6 is a diagram showing an input/output correspondence table of a density correction circuit;

Fig. 7 is a diagram showing an operation panel;

Fig. 8 is a graph showing the input/output correspondence table of the density correction;

Fig. 9 is a flowchart for the image processes;

Fig. 10 is a block diagram of a binarization processing unit;

Fig. 11 is a diagram showing an error dispersion matrix;

Figs. 12A to 12C are diagrams showing flows of the binarizing processes by the error dispersion method;

Fig. 13 is a block diagram of an image processing apparatus as a second embodiment of the invention;

Fig. 14 is a block diagram showing the details of a pre-processing unit in Fig. 13;

Fig. 15 is a flowchart showing a flow of the image processes in the second embodiment;

Fig. 16 is a flowchart showing a flow of the original discriminating processes;

Fig. 17 is a diagram showing the positional relation of pixels which are used to discriminate an original;

Fig. 18 is a block diagram showing the details of the read unit in Fig. 1 according to the third embodiment;

Fig. 19 is a diagram showing an ROM of a data conversion circuit in the third embodiment;

Fig. 20 is a diagram showing an input/output correspondence table stored in the ROM in Fig. 19;

Fig. 21 is a diagram showing an operation panel in the third embodiment; and

Fig. 22 is a diagram showing a flowchart for the image processes in the third embodiment.

## DETAILED DESCRIPTION OF THE PREFERRED EMBODIMENTS

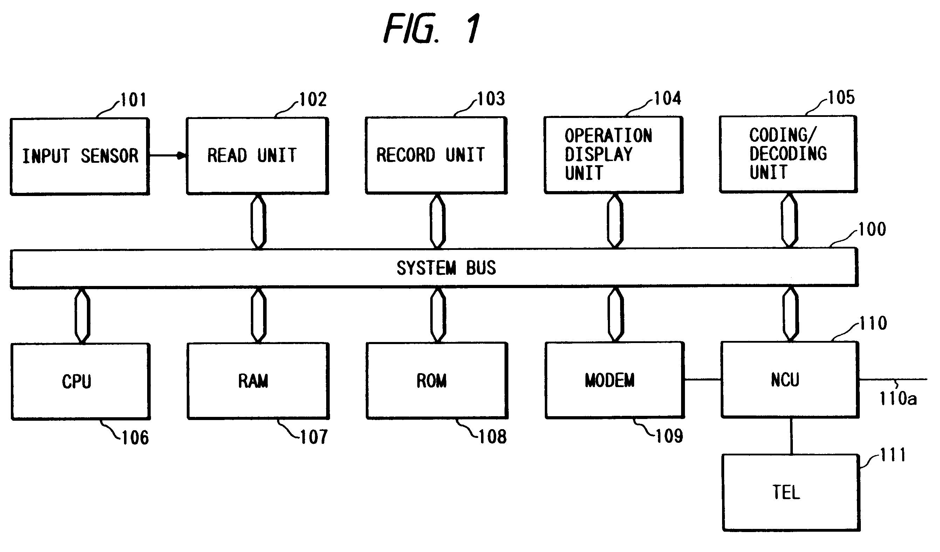

An embodiment of the present invention will be described in detail hereinbelow with reference to the drawings. Fig. 1 is a block diagram of a facsimile apparatus to which the invention is applied.

In Fig. 1, reference numeral 102 denotes a read unit to read an original. In the read unit 102, a signal which was read by a CCD (solid state image pickup device) line sensor 101 is digitized into binary data of white and black. The read unit will be described in detail hereinlater.

Reference numeral 103 denotes a record unit to record an image. The record unit 103 is constructed by a thermal copy transfer printer, a laser beam printer, an ink jet printer, or the like which is ordinarily used in the facsimile apparatus.

Reference numeral 104 denotes an operation display unit to execute the operation of the facsimile apparatus. The operation display unit 104 is constructed by a plurality of key input switches, a key scan circuit, a display such as a liquid crystal display or the like to display various information, and a display driver.

Reference numeral 105 indicates a coding/decoding unit for coding transmission data and decoding reception data.

Reference numeral 106 denotes a CPU to execute the control of the whole system through a system bus 100; 108 a read only memory (ROM) to store control programs of the CPU 106; and 107 a random access memory (RAM) which is used as a work area for image processes and for the CPU 106.

Reference numeral 109 indicates a modem for modulating transmission data and demodulating reception data. Reference numeral 110 indicates a network control unit (NCU) for switching a telephone circuit 110a to the side of the modem 109 or the side of a telephone 111.

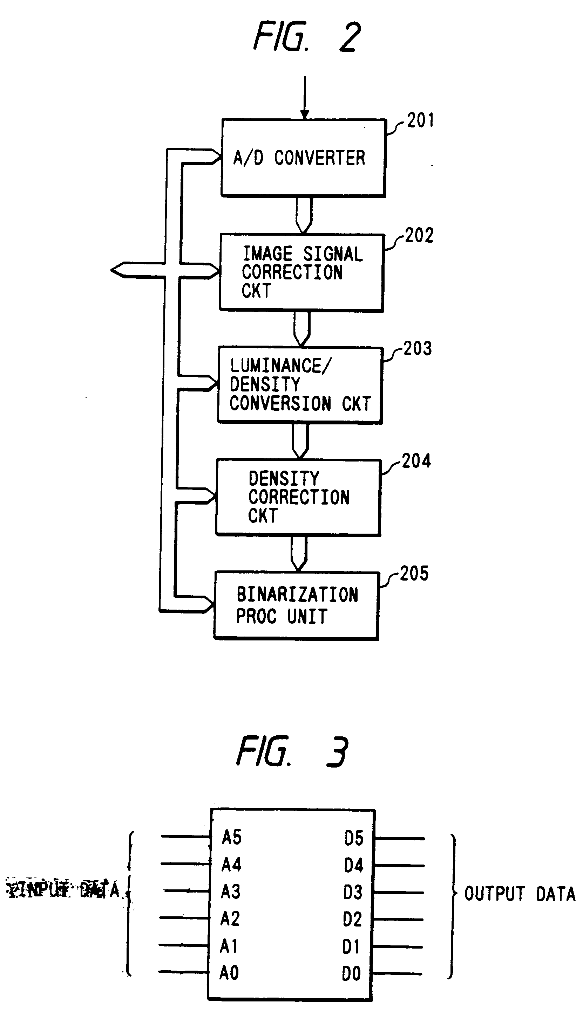

Fig. 2 is a block diagram showing the details of the read unit 102 in Fig. 1.

Reference numeral 201 denotes an A/D converter for converting the analog image data which was read by the input sensor unit 101 into the digital image data of six bits as the quantization number. The digital image data is the luminance data. The number of gradations is set to 64. The data {000000} of the lowest luminance indicates darkest black (full black) and the data {111111 } of the highest luminance represents lightest white (full white).

The luminance data from the A/D converter 201 is sent to an image signal correction circuit 202. In the correction circuit 202, a sensitivity variation of the CCD of the input sensor unit 101 is corrected and a shading distortion as a distortion of the light distribution characteristics of a light source is corrected.

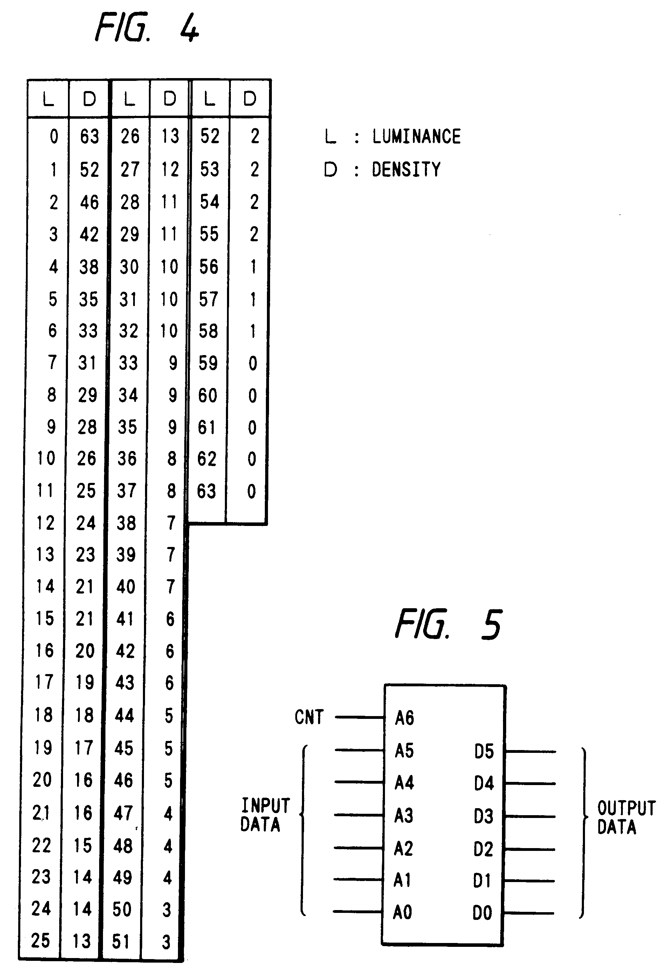

Reference numeral 203 indicates a luminance/density conversion circuit for converting the luminance data from the image signal correction circuit 202 into the density data. Fig. 3 shows an example in the case where an ROM is used for the luminance/density conversion circuit 203. The luminance signal from the image correction circuit 202 is input to addresses $A_0$ to $A_0$ in the ROM. The density data based on an input/output correspondence table in Fig. 4 is output to output terminals $D_0$ to $D_5$ of the ROM. In the input/output correspondence table of Fig. 4, the relation between the luminance and the density is satisfied.

$$density = -\gamma \log(luminance)$$

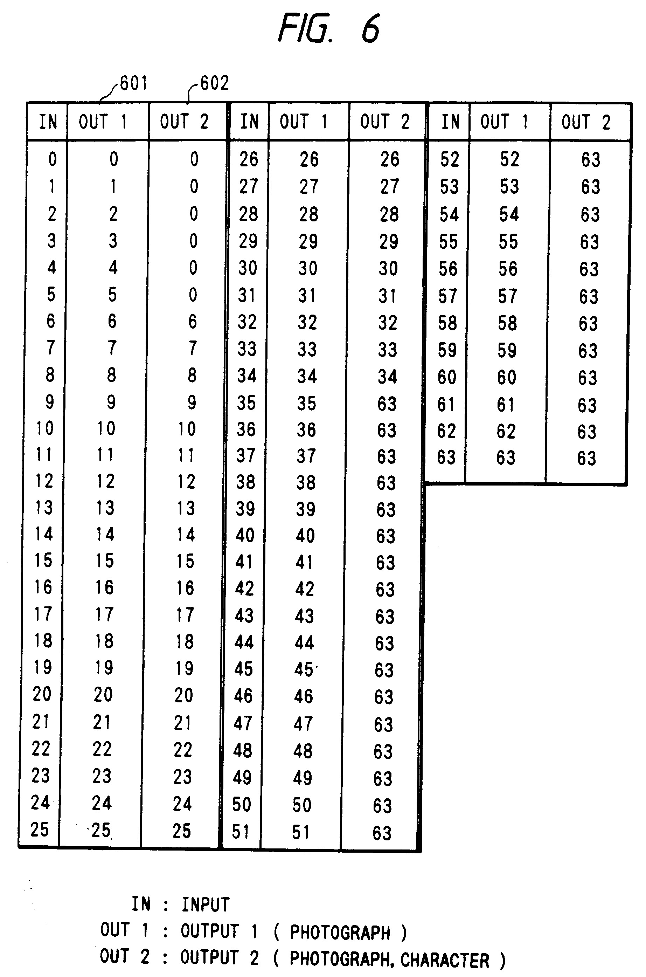

Reference numeral 204 indicates a density correction table to correct the density data from the luminance/density conversion table 203. Fig. 5 shows an example in the case where an ROM is used for the density correction table. The density data from the luminance/density conversion table 203 is input to addresses $A_0$ to $A_0$ in the ROM. A control signal CNT from the CPU 106 is input to an address $A_0$. The data conversion table written in the ROM is selected. The correction density data based on an input/output correspondence table of Fig. 6 is output from output terminals $D_0$ to $D_5$ of the ROM.

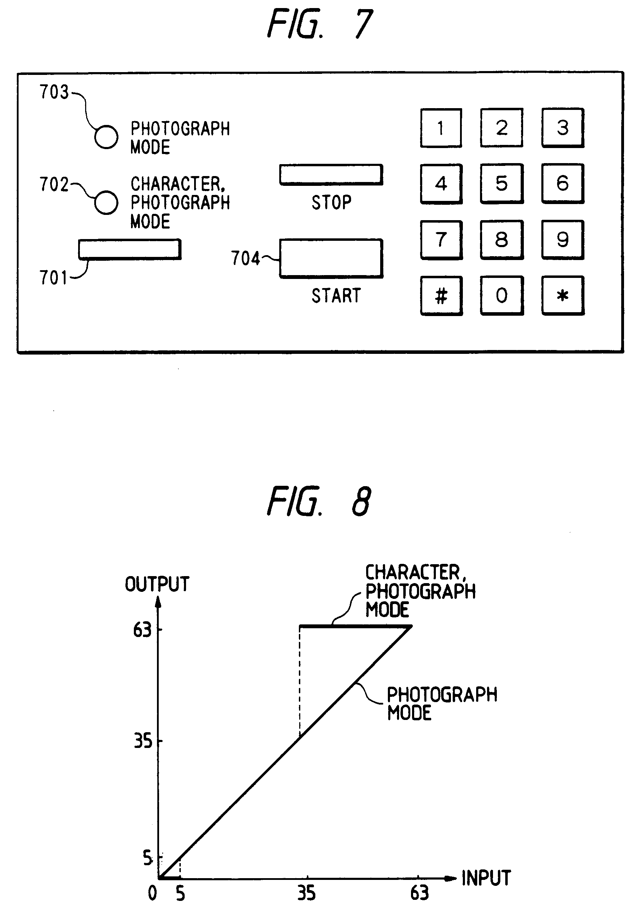

The table in the ROM can be selected by the control signal CNT and the signal CNT corresponding to the key operation of the operation display unit 104 in Fig. 1 is output from the CPU. Fig. 7 is a diagram showing an operation panel of the operation display unit 104 to switch the control signal CNT. Reference numeral 701 denotes a mode change-over switch to switch between a half tone mode (photograph mode) and an auto mode (photograph/character mode). Reference numerals 702 and 703 denote LEDs. The selected mode is indicated by lighting on the LED. In the embodiment, when the photograph mode is selected by the switch 701. CNT = 0 and a table 601 in Fig. 6 is selected. When the photograph/character mode is selected by the switch 701, CNT = 1 and a table 602 in Fig. 6 is selected.

Fig. 8 is a graph showing a table in Fig. 6. That is, when CNT = 0, the table 601 of the photograph mode in Fig. 6 is selected and the density data is not substantially corrected. Due to this, in the case of processing a photograph original, by selecting the photograph mode, a good half tone image can be regenerated.

On the other hand, when CNT = 1, the table 602 of the photograph/character mode in Fig. 6 is selected and the density data is corrected.

Therefore, by selecting the photograph/character mode for the original in which photographs and characters mixedly exist, although the gradation of the photograph portion is slightly sacrificed, the resolution of the character portion can be remarkably improved. Thus, the coding efficiency can be also improved.

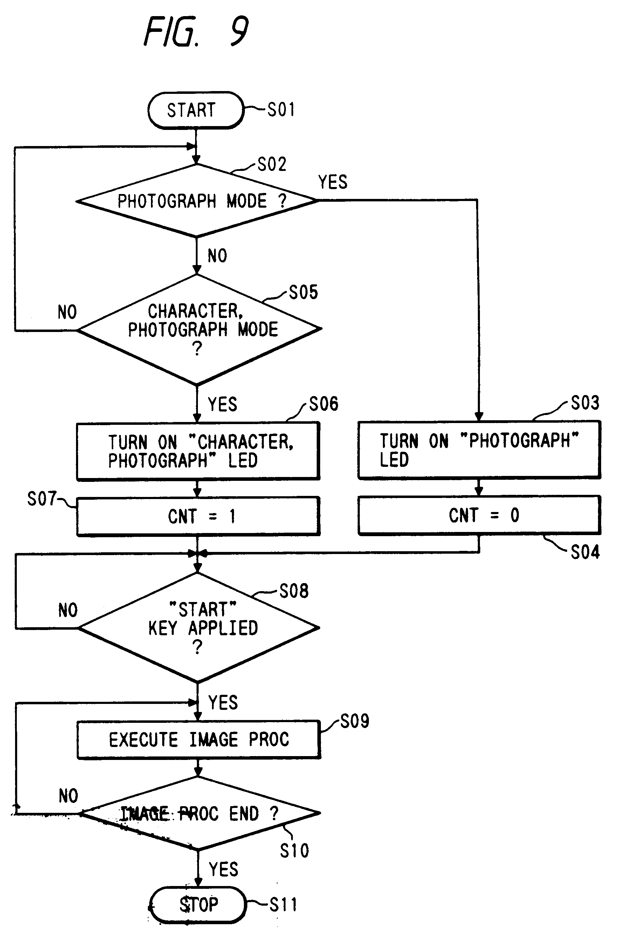

Fig. 9 shows a flowchart for the operations in the case where the density correction table is selected in accordance with the input key and the image processes are executed.

In step S02, a check is made to see if the photograph mode has been selected by the mode selection key 701 or not. If YES, step S03 follows and the photograph LED 703 is lit on. In step S04, CNT = 0 is output. In the density correction circuit 204, the signal CNT = 0 sent from the CPU 106 is received and the density correction table 601 in Fig. 6 is selected.

If NO in step S02, step S05 follows and a check is made to see if the character/photograph mode has been set or not. If YES, step S06 follows and the character/photograph LED 702 is lit on. In step S07, CNT = 1 is output. In the density correction circuit 204, the signal CNT = 1 sent from the CPU 106 is received and the density correction table 602 in Fig. 6 is selected.

The processing routine advances to step S08 and a check is made to see if a start key 704 has been pressed or not. If YES, step S09 follows and a start instruction is sent to the density correction circuit 204 and binarization processing unit 205. In step S10, a check is made to see if an end of image processes has been informed from the binarization processing unit 205 or not. If YES, the image processes are finished in step S11.

As mentioned above, in the embodiment, in the case of an image in which characters and photographs mixedly exist, the correction is executed to the density data in which the luminance/density conversion was performed. The corrected density data is binarized by the error dispersion method.

Thus, in the case where the density data is set to a predetermined value (5) or less, the density data is corrected to full white (0), so that it is possible to prevent that particle-like noises are generated in the highlight portion of the image.

On the other hand, when the density data is set to a predetermined value (35) or more, the density data is corrected to full black (63), so that it is possible to prevent that the black portions are extinguished in the dark portion or that the edges in the character portion are cut out.

According to the above description, even in the case where the binary data which was binarized is coded by the coding/decoding unit 105, the coding efficiency can be improved and the image having excellent resolution and gradation can be transmitted to a partner facsimile apparatus at a high speed.

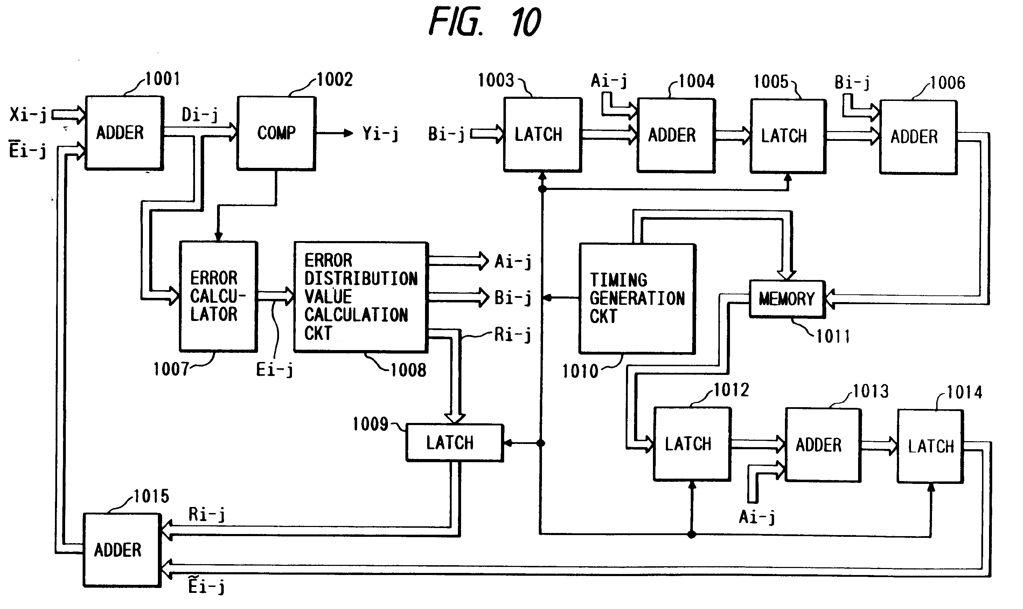

Fig. 10 is a block diagram showing the details of the binarization processing unit 205 in Fig. 2.

The data $X_{i,j}$ (density data) sent from the density correction circuit 204 is added by an adder 1001 to error data $E_{i,j}$ from an adder 1015 which was generated when the binarization had already been executed.

The error corrected data $D_{i,j}$ is expressed by the following equation.

$$D_{i,j} = X_{i,j} + \overline{E}_{i,j}$$

The data $D_{i,j}$ is binarized by a comparator 1002 on the basis of a threshold value T (T = 32). That is, a binary output $Y_{i,j}$ is expressed as follows.

$$D_{i,j} \geqq T \dots Y_{i,j} = 63$$
$$D_{i,j} < T \dots Y_{i,j} = 0$$

On the other hand, the data $D_{i,j}$ is sent to an error calculator 1007. In the error calculator 1007, the errors $E_{i,j}$ which are distributed to the peripheral pixels are calculated on the basis of the data $D_{i,j}$ and the binary output $Y_{i,j}$. That is, $E_{i,j}$ can be expressed as follows.

$$E_{i,j} = D_{i,j} - Y_{i,j}$$

The errors $E_{i,j}$ are sent to an error distribution value calculation circuit 1008.

In the calculation circuit 1008, the values of errors which are distributed to four peripheral pixels of the objective pixel are calculated.

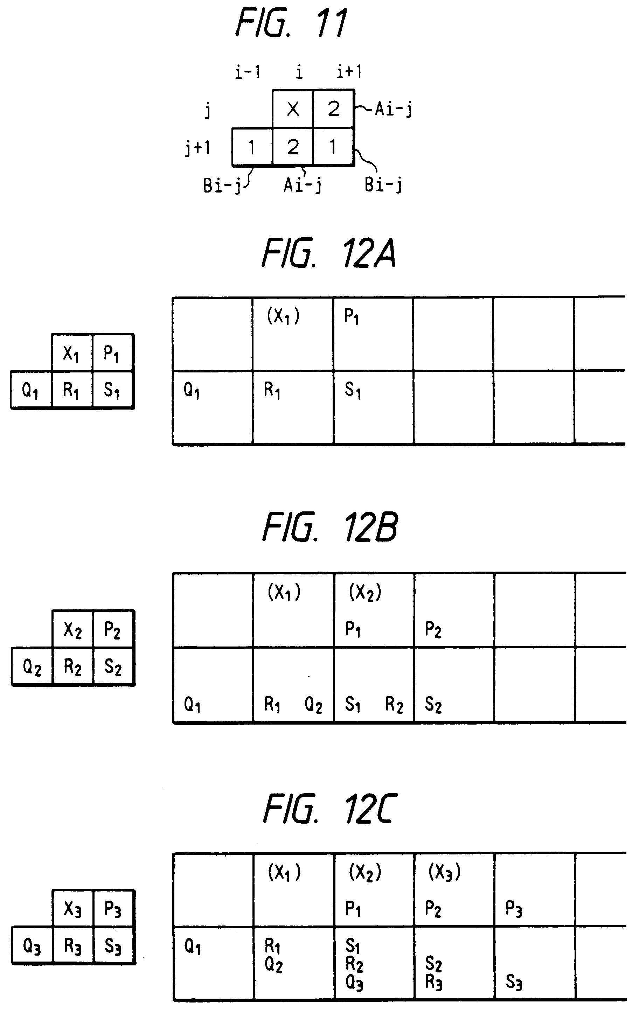

Fig. 11 is a diagram showing a weight matrix.

The matrix shows the positions of the pixels to which the errors $E_{i,j}$ generated at the objective pixel X are distributed and its distribution ratio.

The error distribution value calculation circuit 1008 determines $A_{i,j}$ and $B_{i,j}$ in Fig. 11 as follows.

$$A_{i,j} = 2 \times I_{nt}(E_{i,j} \times \frac{1}{6})$$

$$B_{i,j} = I_{nt}(E_{i,j} \times \frac{1}{6})$$

The calculation circuit 1008 omits the figures below the decimal point. That is, only the integer calculation can be performed. $I_{nt}$ denotes that the figures below the decimal point are omitted. By omitting the figures below the decimal point, a remainder $R_{i,j}$ is generated between the errors $E_{i,j}$ generated at the objective pixel and $A_{i,j}$ and $B_{i,j}$ which are distributed to four peripheral pixels and were calculated by the error distribution value calculation circuit 1008. The remainder $R_{i,j}$ can be expressed by the following equation.

$$R_{i,j} = E_{i,j} - 2 \times (A_{i,j} + B_{i,j})$$

The remainder $R_{i,j}$ is sent to a latch 1009 and is delayed by a time corresponding to one pixel and is added to input data $X_{i+1,j}$ of the next pixel.

On the other hand, $A_{i,j}$ is sent to an adder 1013 in order to distribute to the pixel (i+1, j) and is also sent to an adder 1004 in order to distribute to the pixel (i, i+1). On the other hand, $B_{i,j}$ is sent to a latch 1003 in order to distribute to the pixel (i+1, j+1) and is also sent to an adder 1006 in order to distribute to the pixel (i-1, j+1).

A memory 1011 stores the error which is distributed to the (j+1)th line. The error data of the pixels of at least one line can be stored into the memory 1011.

A timing generation circuit 1010 generates various signals such as latch signals to latches 1009, 1003, 1005, 1012, and 1014, an address signal to the memory 1011, and the like.

An error distributing method will be described further in detail with reference to Fig. 12.

Fig. 12 is a diagram showing a flow for the binarizing processes by the error dispersion method. First, the error generated at an objective pixel $X_1$ is weighted and the resultant weighted errors assume $P_1$, $Q_1$, $R_1$ and $S_1$. As shown in Fig. 12A, these errors are distributed to the four peripheral pixels. The error $P_1$ is sent to the adder 1013 in Fig. 10, $Q_1$ is sent to the adder 1006, $R_1$ is sent to the adder 1004, and $S_1$ is sent to the latch 1003. $Q_1$ is written into address 1 in the memory 1011.

Next, when the objective pixel is shifted to $X_2$, as shown in Fig. 12B, errors $P_2$, $Q_2$, $R_2$, and $S_2$ are distributed to four peripheral pixels. $P_2$ is sent to the adder 1013. $Q_2$ is added by the adder 1006 to $R_1$ which was generated at $X_1$ and the result is written into address 2 in the memory 1011. $R_2$ is added by the adder 1004 to $S_1$ which was generated at $X_1$. $S_2$ is sent to the latch 1003.

When the objective pixel is shifted to $X_3$, as shown in Fig. 12C, errors $P_3$, $Q_3$, $R_3$ and $S_3$ are distributed to four peripheral pixels. $P_3$ is sent to the adder 1013.

$Q_3$ is added by the adder 1006 to $S_1$ which was generated at $X_1$ and to $R_2$ which was generated at $X_2$ and the result is written into address 3 in the memory 1011. $R_3$ is added by the adder 1004 to $S_2$ which was generated at $X_2$. $S_3$ is sent to the latch 1003.

By executing the above processes by one line, the following values are written into the memory 1011.

address 1 in the memory ..... $M_1 = Q_1$
address 2 in the memory ..... $M_2 = R_1 + Q_2$
address 3 in the memory ..... $M_3 = S_1 + R_2 + Q_3$
address 4 in the memory ..... $M_4 = S_2 + R_3 + Q_4$

.
.
.
.
.

5

address i in the memory ..... $M_i = S_{i-2} + R_{i-1} + Q_1$

When the processes of one line are finished and the processing routine advances to the next line, the errors generated at the previous line are read out of the memory.

The errors which were read out of the memory are added by the adder 1013 to the errors which were generated at the time of the one-preceding pixel. The result is output from the latch 1014.

The timing to read out the errors from the memory 1011 is controlled by the timing generation circuit 1010 so as to correspond to the previous line. The timing generation circuit 1010 controls so as to read out address $M_{i-3}$ in the memory 1011 if the objective pixel is set to $X_i$.

By executing the above-described processes for all of the input data, the binarizing process by the error dispersion method can be performed.

As mentioned above, in the processes of the embodiment of the invention, the operator can select either the photograph (half tone) mode or the character/photograph (auto) mode, and when the character/photograph mode is selected, the luminance data is converted into the density data, the density data is corrected, and thereafter, the density data is binarized by the error dispersion method.

Therefore, when the photograph mode is selected, an image of the excellent gradation can be regenerated in a manner similar to the conventional apparatus.

In the character/photograph mode, the density data of a predetermined value or less can be converted into the density data of full white. Thus, since the correct error data is accumulated, it is possible to prevent that the particle-like noises are generated in the highlight portion of the image.

On the other hand, there is a case where when a light amount of a fluorescent lamp is small at a low temperature or the like, the video signal level from the CCD is smaller than the dynamic range of the A/D converter, so that even if a full white image is read, a numerical value of a certain degree is output from the A/D converter and particle-like noises are generated.

Even in such a case, by converting the density data of a predetermined value or less into the full white density data, the generation of the particle-like noises can be prevented. Due to this, in the case of coding the binary data, the coding efficiency can be improved and the data transmitting time can be remarkably reduced.

On the other hand, according to the embodiment, in the character/photograph mode, the density data of a predetermined value or more is converted into the full black density data. Thus, it is possible to prevent that the image region is extinguished like a white image in the dark portion of the image because of the accumulation of the negative error data.

Further, by converting the density data of a predetermined value or more into the full black density data, even for light density characters, clear black can be regenerated in a manner similar to the case where the simple binarizing process was executed.

On the other hand, in the embodiment, since the density correction is performed, the binarizing process corresponding to the characteristics of the recording system can be also executed. As mentioned above, in the embodiment, when the binarizing process is executed by the error dispersion method, the luminance data is converted into the density data as a pre-process and, thereafter, the density data is corrected. Thus, an image having an excellent resolution in the character portion and an excellent gradation in the photograph portion can be regenerated.

The embodiment has been described with respect to the example in which the photograph mode and the character/photograph mode have been set as the processing modes and the binarizing process is executed by the error dispersion method in any of the two modes. However, a character mode to execute the simple binarizing process can be also further provided.

The embodiment has been described with respect to an example in which the error dispersion method has been used as a binarizing method of the density preservation type. However, the invention can be also realized by using other binarizing methods of the density preservation type.

In the embodiment, in the density correction table 602 in Fig. 6, the function of the interval of $B_W$ (6) $\leqq$ B $\leqq B_B$ (34) is not limited to

$\overline{B} = B$

$\overline{B}$ : correction density (output)

B : original density (input)

The function of $\overline{B} = \alpha B$ ($\alpha > 0$) may be also used.

The embodiment has been described with respect to the example in which the operator manually switches and selects either the photograph mode or the character/photograph mode. However, the photograph mode and character/photograph mode can be also switched by automatically recognizing an original.

An embodiment in such a case will now be described hereinbelow.

The second embodiment of the invention will be described in detail hereinbelow with reference to the drawings.

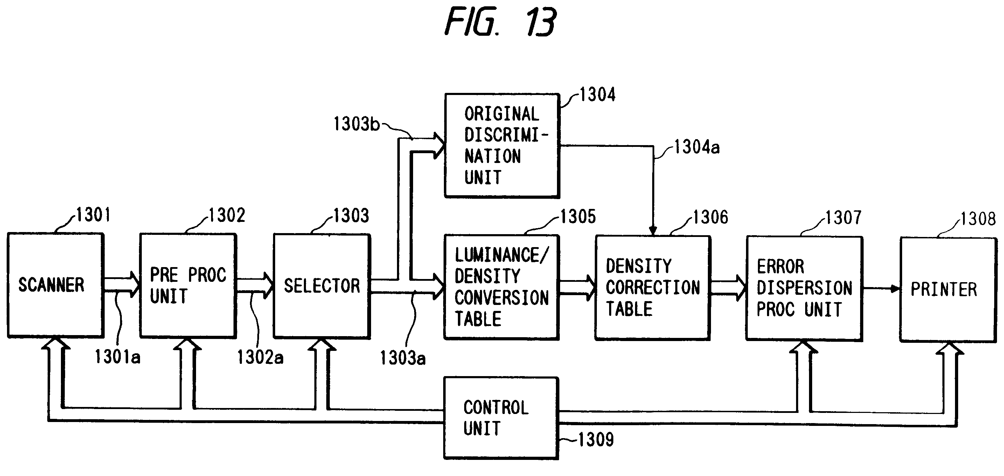

Fig. 13 is a block diagram of an image processing apparatus to which the second embodiment of the invention is applied.

In Fig. 13, reference numeral 1301 denotes a scanner to read an original and 1301a indicates analog image data which is obtained from the scanner.

Reference numeral 1302 denotes a pre-processing unit to pre-process the analog image data 1301a and 1302a indicates digital image data which was digitized into the data of six bits. The digital image data is the luminance data.

Reference numeral 1303 denotes a selector to control a flow of an image signal.

Reference numeral 1305 indicates a luminance/density conversion table to convert the luminance data into the density data.

Reference numeral 1306 denotes a density correction table to correct the density data.

Reference numeral 1307 denotes an error dispersion processing unit to convert the density data which was sent from the density correction table 1306 into the binary data by the error dispersion method.

Reference numeral 1308 indicates a printer to record the data which was binarized by the error dispersion processing unit 1307.

Reference numeral 1304 denotes an original discrimination unit for discriminating whether the original which was read by the scanner 1301 is a character/photograph original or a photograph original and for transmitting a discrimination signal to the density correction table 1306.

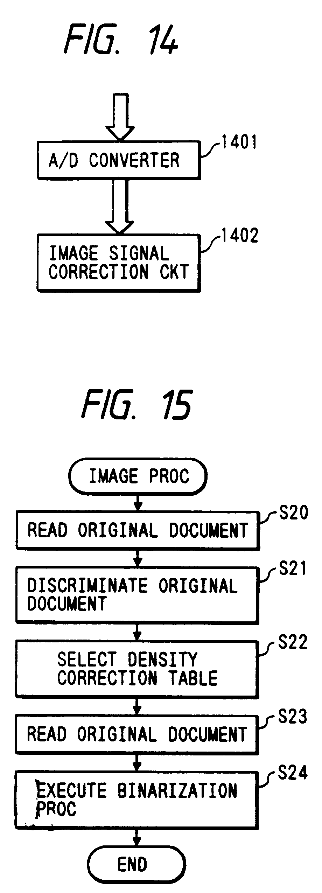

Fig. 14 is an internal constructional diagram of the pre-processing unit 1302.

First, the video signal 1301a from the scanner 1301 is digitized into 6-bit data by an A/D converter 1401. The number of gradations is set to 64. The data $\{000000\}_2$ of the lowest luminance indicates darkest black (full black) and data $\{111111\}_2$ of the highest luminance indicates lightest white (full white).

The luminance data from the A/D converter 1401 is sent to an image signal correction circuit 1402. In the correction circuit 1402, a sensitivity variation of the CCD of the scanner 1301 is corrected and a shading distortion as a distortion of the light distribution characteristics of the light source is corrected.

Fig. 15 is a diagram showing a flow of the image processing method in the second embodiment.

In step S20, the original is first read. In step S21, a check is made to see if the original is a photograph original or a photograph/character original.

In the next step S22, a proper density correction table is selected on the basis of the result of the discrimination in step S21.

In step S23, the original is again read. In step S24, the read data of the original is binarized.

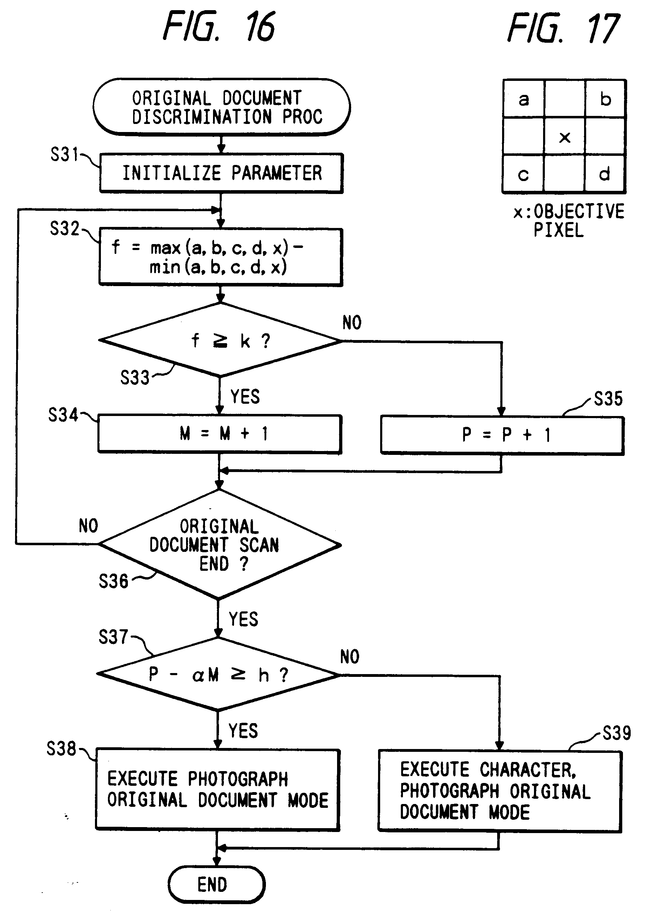

Fig. 16 is a flowchart showing a flow for the processes of the original discrimination unit 1304.

In step S31, parameters which are used in the original discrimination unit 1304 are initialized.

In step S32, the following calculation is executed.

$$f = \max(a, b, c, d, x) - \min(a, b, c, d, x)$$

$\{ a, b, c, d, x \}$ denotes a luminance value of the pixel existing at the position shown in Fig. 17. Operands $\max(\ )$ and $\min(\ )$ denote the maximum value and the minimum value among the pixel values a, b, c, d, and x.

Then, in step S33, the value f obtained in step S32 is compared with a parameter k. If $f \geq k$, it is determined that the original region is a character/photograph region. Then, step S34 follows and "1" is added to the value of a variable M.

If $f < k$, the original region is decided to be a photograph region. Step S35 follows and "1" is added to the value of a variable P.

In step S36, a check is made to see if the discrimination has been executed with respect to all of the pixels of the original or not. If YES, step S37 follows. If NO, step S32 follows.

In step S37, a check is made to see if the original is a character/photograph original or a photograph original.

By use of the values of M and P obtained by the above processes, the calculation

$$P - \alpha M \geq h$$

h : discrimination parameter is executed in step S37. If $(P - \alpha M)$ is equal to or larger than h, the original is decided to be a photograph original. Then, step S38 follows and the control signal CNT = 0 is sent to the density correction table 1306.

If $(P - \alpha M)$ is smaller than h, the original is determined to be a character/photograph original. Then, step S39 follows and the control signal CNT = 0 is sent to the density correction table 1306.

By the above processes, a check is made to see if the original is a character/photograph original or a photograph original, and the proper density correction table 1306 is selected on the basis of the result of the discrimination.

The luminance/density conversion table 1305, density correction table 1306, and error dispersion processing unit 1307 correspond to the luminance/density correction circuit 203, density correction table 204, and binarization processing unit 205 in Fig. 2, respectively, and the same processes are executed. Therefore, their descriptions are omitted here.

As mentioned above, according to the second embodiment, in addition to the first embodiment, the photograph mode and the character/photograph mode are automatically discriminated, the density correction table corresponding to each mode can be selected, and the operator does not need to select the mode in accordance with the original.

In Fig. 13, explanation was made with respect to the example in which the data which was binarized by the error dispersion processing unit 1307 is recorded by the printer 1308. However, as shown in the first embodiment, by providing the coding unit and the communicating function such as modem, NCU, and the like, the second embodiment can be also applied to the facsimile apparatus.

In the first and second embodiments mentioned above, after the luminance data obtained from the input sensor was converted into the density data, the density data is corrected and binarized.

In the following third embodiment, when the luminance data is converted into the density data, the foregoing correction is also commonly executed. In the third embodiment, the photograph mode is set to two kinds of denser mode and lighter mode and total three kinds of modes including the character/photograph mode can be selected and a luminance/density conversion table can be selected in accordance with the selected mode.

In the third embodiment, the block diagram of the whole facsimile apparatus in Fig. 1 and the diagrams regarding the binarizing processes by the error dispersion method of Figs. 7 to 9 and their descriptions are the same as those in the first embodiment. Therefore, they are omitted here.

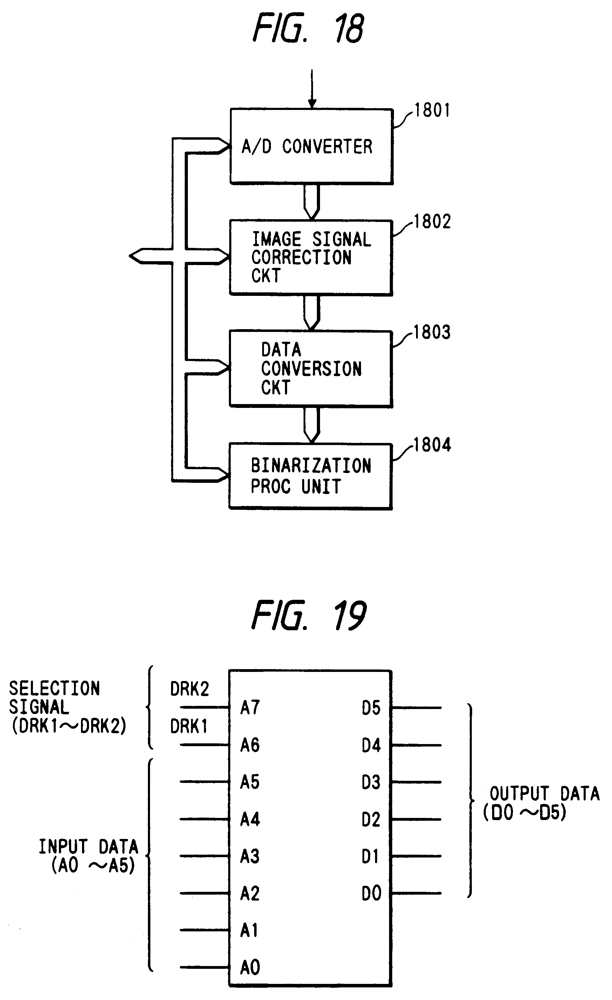

Fig. 18 is a block diagram showing the details of the read unit 102 in Fig. 1 and a part of Fig. 2 is modified.

Reference numeral 1801 denotes an A/D converter for converting the analog image data which was read by the input sensor unit 101 into the digital image data of 6 bits as a quantization number. The digital image data is the luminance data. The number of gradations is set to 64. The data {000000} of the lower luminance indicates darkest black (full black) and the data {111111} of the highest luminance indicates lightest white (full white).

The luminance data from the A/D converter 1801 is sent to an image signal correction circuit 1802. In the correction circuit 1802, a sensitivity variation of the CCD of the input sensor unit 101 is corrected and a shading distortion as a distortion of the light distribution characteristics of the light source is also corrected.

Reference numeral 1803 denotes a conversion circuit to convert the luminance data from the image signal correction circuit 1802 into the density data.

Reference numeral 1804 indicates a binarization processing unit for binarizing the density data from the data conversion circuit 1803 by the processes by the error dispersion method shown in Figs. 10 to 12.

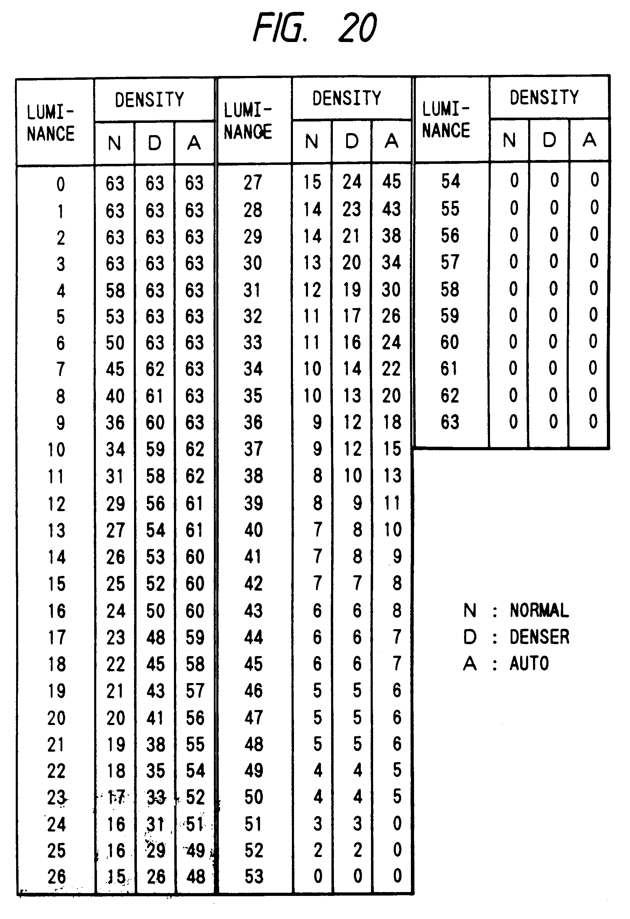

Fig. 19 shows an example in the case where an ROM is used for the data conversion circuit 1803. The luminance data from the image signal correction circuit 1802 is input to addresses $A_0$ to $A_5$ in the ROM. Control signals $DRK_1$ and $DRK_2$ from the CPU 106 are input to addresses $A_6$ and $A_7$. The data conversion table written in the ROM is selected. The density data based on an input/output correspondence table (ROM table) in Fig. 20 is output to output terminals $D_0$ to $D_5$ of the ROM. Reference numeral 1804 denotes the binarization processing unit for binarizing the density data which was sent from the data conversion circuit 1803 by the error dispersion method. The tables in the ROM can be selected by the control signals $DRK_1$ and $DRK_2$, respectively. The control signals $DRK_1$ and $DRK_2$ are output in accordance with the key operation of the operation display unit 104 in Fig. 1.

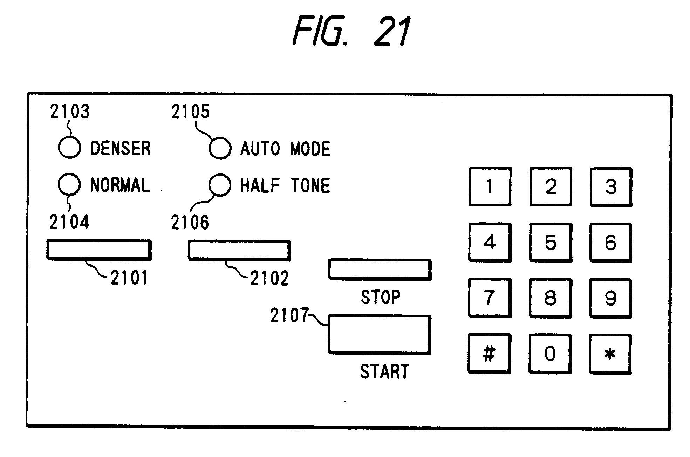

Fig. 21 is a diagram showing the operation panel of the operation display unit 104 to switch the control signals. Reference numeral 2101 denotes a recording density change-over switch; 2102 indicates a change-over switch to switch between the half tone mode and the auto mode; and 2103 to 2106 denote LEDs. The selected mode is shown by lighting on the corresponding LED. In the embodiment, the switches 2101 and 2102 are combined and used in the following manner.

|  | $DRK_1$ | $DRK_2$ |
|---|---|---|
| (1) Half tone + normal | | |
| : half tone of normal density | 0 | 0 |
| (2) Half tone + denser | | |
| : half tone of denser density | 0 | 1 |
| (3) Auto mode | | |
| : auto mode | 1 | 0 |

The half tone mode is a mode to process a half tone image such as a photograph or the like. The auto mode is a mode to process an image in which characters and photographs mixedly exist.

The content of each table will now be described with respect to an input/output correspondence table of Fig. 20. Generally, there is the following relation between the luminance and the density.

$$(density) = -\gamma \log(luminance)$$

$\gamma$ : positive constant

$(DRK_1, DRK_2) = (0, 0), (0, 1)$ denote tables in which the value of $\gamma$ is changed, respectively.

That is, if $(DRK_1, DRK_2) = (0, 0)$, when the luminance data is converted into the density data, the "normal" mode in Fig. 20 is selected. If $(DRK_1, DRK_2) = (0, 1)$, the "denser" mode in Fig. 20 is selected.

In this case, in each of the above modes, an image of the good gradation can be regenerated for a photograph image.

When $(DRK_1, DRK_2) = (1, 0)$, that is, in the auto mode, with respect to an image whose luminance data is set to 9 or less, the density data is set to 63. With regard to an image whose luminance data is set to 51 or more, the density data is set to 0. With respect to an image whose luminance data lies within a range from 10 to 50, the density data is set to a value which satisfies the relation of

$$(density) = -\gamma_l \log(luminance)$$

That is, in the auto mode, the dynamic range is set to a narrower value than that in the half tone mode.

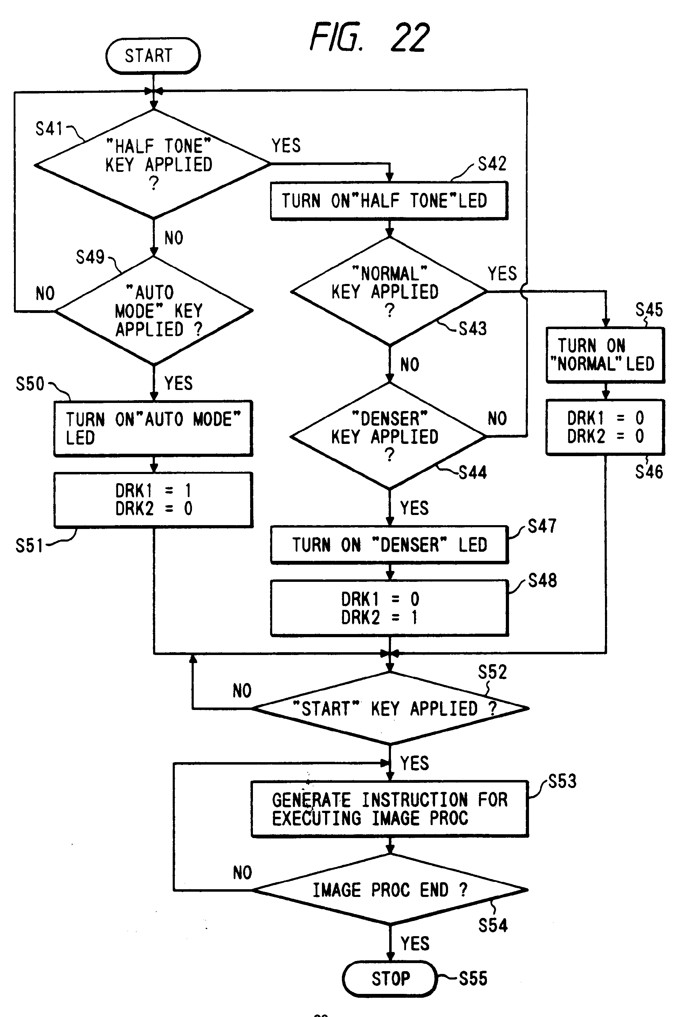

Fig. 22 shows a flowchart for the operations in which the conversion table is selected and the image processes are executed in accordance with the input key.

In step S41, a check is made to see if the half tone key 2102 has been applied or not. If YES, step S42 follows and the half tone LED 2106 is lit on. Then, step S43 follows and a check is made to see if the normal key 2101 has been depressed or not. If YES, step S45 follows and the normal LED 2104 is lit on. Further, step S46 follows and the signal $DRK_1 = 0$ and the signal $DRK_2 = 0$ are output. In the data conversion circuit 1803, the signals of $DRK_1 = 0$ and $DRK_2 = 0$ are received and the conversion table of "normal" in Fig. 20 is selected.

If the normal key is not depressed in step S43, step S44 follows and a check is made to see if the denser key 2101 has been depressed or not. If YES, step S47 follows and the denser LED 2103 is lit on. In step S48, the signals $DRK_1 = 0$ and $DRK_2 = 1$ are output. In this case, in the data conversion circuit 1803, the signals of $DRK_1 = 0$ and $DRK_2 = 1$ are received and the conversion table of "denser" in Fig. 20 is selected.

In step S49, a check is made to see if the auto mode key has been depressed or not. If YES, step S50 follows and the auto mode LED is lit on. In step S51, the signals of $DRK_1 = 1$ and $DRK_2 = 0$ are output. In this case, in the data conversion circuit 1803, the signals of $DRK_1 = 1$ and $DRK_2 = 0$ are received and the conversion table of "auto" in Fig. 20 is selected.

Then, in step S52, a check is made to see if a start key 2107 has been depressed or not. If YES, step S53 follows and the execution of the image processes is instructed to the data conversion circuit 1803 and the binarization processing unit 1804. In step S54, a check is made to see if the end of image processes has been informed from the binarization processing unit 1804 or not. If YES, the image processes are finished in step S45.

As mentioned above, in the embodiment, in the case of an image in which characters and photographs mixedly exist, the luminance/density conversion table of the auto mode in which the dynamic range is narrow is selected. The luminance data is converted into the density data by use of the selected table. The resultant density data is binarized by the error dispersion method.

Due to this, in the case of an image whose density data is set to a predetermined value (51) or more, the density data is set to full white (0). Therefore, it is possible to prevent that particle-like noises are generated in the highlight portion of the image.

On the other hand, in the case where the luminance data is set to a predetermined value (9) or more, the density data is set to full black (63), so that it is possible to prevent that the black region is extinguished in the dark portion and the edges in the character portion are cut out.

From the above description, in the case where the binary data which was binarized is coded by the coding/decoding unit 105 as well, the coding efficiency can be improved and an image having excellent resolution and gradation can be transmitted to a partner facsimile apparatus at a high speed.

As described above, in the processes of the third embodiment of the invention, the operator can select either the photograph (half tone) mode or the character/photograph (auto) mode. When the character/photograph mode is selected, the luminance data is converted into the density data by using the luminance/density conversion table of a narrower dynamic range than that in the photograph mode and the density data is binarized by the error dispersion method.

That is, in the character/photograph mode, the luminance data of a predetermined value or more can be converted into the density data of full white. Due to this, since the positive error data is accumulated, it is possible to prevent that particle-like noises are generated in the highlight portion of the image.

On the other hand, when a light amount of the fluorescent lamp is small at a low temperature or the like, the video signal level from the CCD is small for the dynamic range of the A/D converter. Therefore, there is a case where even if an image of full white is read, a numerical value of a certain degree is output from the A/D converter, so that particle-like noises are generated.

Even in such a case, as mentioned above, by converting the luminance data of a predetermined value or more into the full white density data, it is possible to prevent that the particle-like noises are generated. Thus, in the case of coding the binary data, the coding efficiency can be improved and the data transmitting time can be remarkably reduced.

According to the third embodiment, in the character/photograph mode, the luminance data of a predetermined value or less is converted into the full black density data. Thus, it is possible to prevent that the image becomes a blank region in the dark portion of the image because the negative error data is accumulated.

Further, by converting the luminance data of a predetermined value or less into the full black density data, a clear black image can be regenerated in a manner similar to the case where the character portion was subjected to the simple binarizing process.

As mentioned above, according to the third embodiment, when the binarizing process is performed by the error dispersion method, as a pre-process, the luminance data is converted into the density data by using the luminance/density conversion table of a narrower dynamic range than that in the half tone mode, so that an image having an excellent resolution in the character portion and an excellent gradation in the photograph portion can be regenerated.

The third embodiment has been described with respect to the example in which three processing modes such as "normal" and "denser" photograph modes and character/photograph mode have been provided and in any one of those modes, the binarizing process is executed by the error dispersion method. However, the character mode to execute the simple binarizing process can be further also provided.

The embodiment has been described with respect to the example in which the error dispersion method is used as a binarizing method of the density preservation type. However, the invention can be also realized by using other binarizing method of the density preservation type such as mean error least method, mean density preserving method, or the like.

The third embodiment has been described with respect to the example in which the switching between the photograph mode and the character/photograph mode is executed by the manual selection by the operator. However, as shown in the second embodiment, the photograph mode and the character/photograph mode can be also switched by automatically recognizing the original.

In the embodiment, the luminance/density conversion table in the auto mode is set as follows. Assuming that the digitization level is set to 6 bits:

luminance of $B_B$ or less is set to the density

$D_B = 63$ (full black density)

Luminance of $B_W$ or more is set to the density

$D_W = 0$ (full white density)

Luminance of $B_B < B < B_W$ is set to the density

$D = -\gamma \log B$

However, the similar effects can be also obtained even by setting in the following manner.

① Luminance of $B_B$ or less is set to the density

$D_B = 63$

Luminance of $B_W$ or more is set to the density

$D_W = 0$
Luminance of $B_B < B < B_W$ is approximated by a polynomial.
② Luminance of $B_B$ or less is set to the density
$D_B = 63$
Luminance of $B_W$ or more is set to the density
$D = -\gamma \log B$
Or,
Luminance of $B_W$ or more is set to the density
$D_W = 0$
Luminance of $B_W$ or less is set to the density
$D = -\gamma \log B$

As described above, according to the invention, a half tone image such as a photograph or the like can be regenerated at a good gradation. For an image in which characters and photographs mixedly exist, an image of excellent resolution and gradation can be regenerated by a simple construction.

## Claims

1. An image processing apparatus comprising:
   data converting means (203, 1305) for converting luminance data of an image into density data;
   mode selecting means (701, 1304) for selecting a photograph mode or a character/photograph mode;
   correcting means (204, 1306) for correcting the density data on the basis of the mode selected by the selecting means; and
   processing means (205, 1307) which comprises binarising means for binarising the corrected density data on the basis of a predetermined threshold value and means for correcting error data which is generated upon binarisation;
   characterised in that when the character/photograph mode is selected by said selecting means, said correcting means converts a plurality of levels of density data for a low density part in the density data from said data converting means into white data of lowest density and/or converts a plurality of levels of density data for a high density part in said density data into black data of highest density.

2. Apparatus as claimed in claim 1 having a plurality of conversion tables for converting the luminance data into density data.

3. An apparatus according to either claim 1 or claim 2, further having coding means for coding the binary data from the processing means and transmitting means for transmitting the coded data.

4. An apparatus according to any previous claim, wherein said selecting means is a manual switch to select the photograph mode or the character/photograph mode.

5. An apparatus according to any previous claim, wherein said selecting means has means for discriminating whether an input original is a photograph original or an original in which characters and a photograph or photographs mixedly exist, and the selecting means selects either the photograph mode or the character/photograph mode in accordance with the result of the discrimination.

6. An apparatus according to claim 2, wherein when the character/photograph mode is selected by the selecting means, the data converting means converts the luminance data into the density data by use of the conversion table for converting the luminance data of a predetermined value or more into white data and/or converting the luminance data of a predetermined value or less into black data.

7. An apparatus according to claim 2, wherein said plurality of conversion tables comprises two kinds of tables for the photograph mode and one kind of table for the character/photograph mode.

8. An apparatus according to claim 7, wherein in said three kinds of conversion tables, output density data for input luminance data differs, respectively.

9. An apparatus according to claim 7, wherein a dynamic range of the conversion table for the character/photograph mode is narrower than that of the conversion table for the photograph mode.

**Patentansprüche**

1. Bildverarbeitungsgerät mit:

    einer Datenumwandlungsvorrichtung (203, 1305) zum Umwandeln von Luminanzdaten eines Bildes in Dichtedaten;

    einer Betriebsart-Auswählvorrichtung (701, 1304) zum Auswählen einer Fotografie-Betriebsart oder einer Zeichen/Fotografie-Betriebsart;

    einer Korrekturvorrichtung (204, 1306) zum Korrigieren der Dichtedaten auf der Basis der durch die Auswählvorrichtung ausgewählten Betriebsart; und

    einer Verarbeitungseinrichtung (205, 1307), die eine Binärisierungsvorrichtung zum Binärisieren der korrigierten Dichtedaten auf der Basis eines vorbestimmten Schwellenwertes und eine Vorrichtung zum Korrigieren von Fehlerdaten, welche bei der Binärisierung erzeugt werden, aufweist;

    dadurch gekennzeichnet, daß, wenn die Zeichen/Fotografie-Betriebsart durch die Auswählvorrichtung ausgewählt ist, die Korrekturvorrichtung eine Vielzahl von Pegeln von Dichtedaten für einen Niedrigdichteteil in den Dichtedaten von der Datenumwandlungsvorrichtung in weiße Daten von niedrigster Dichte umwandelt und/oder eine Vielzahl von Pegeln von Dichtedaten für einen Hochdichteteil in den Dichtedaten in schwarze Daten von höchster Dichte umwandelt.

2. Gerät wie in Anspruch 1 beansprucht, mit einer Vielzahl von Umwandlungstabellen zum Umwandeln der Luminanzdaten in Dichtedaten.

3. Gerät nach entweder Anspruch 1 oder Anspruch 2, ferner eine Codiervorrichtung aufweisend zum Codieren der Binärdaten von der Verarbeitungsvorrichtung und eine Übertragungsvorrichtung zum Übertragen der codierten Daten.

4. Gerät nach einem der vorhergehenden Ansprüche, wobei die Auswählvorrichtung ein manueller Schalter zum Auswählen der Fotografie-Betriebsart oder der Zeichen/Fotografie-Betriebsart ist.

5. Gerät nach einem der vorhergehenden Ansprüche, wobei die Auswählvorrichtung eine Vorrichtung zum Unterscheiden hat, ob ein eingegebenes Original ein Fotografie-Original oder ein Original ist, in welchem Zeichen und eine Fotografie oder Fotografien gemischt existieren, und die Auswählvorrichtung entsprechend dem Ergebnis der Unterscheidung entweder die Fotografie-Betriebsart oder die Zeichen/Fotografie-Betriebsart auswählt.

6. Gerät nach Anspruch 2, wobei, wenn die Zeichen/Fotografie-Betriebsart durch die Auswählvorrichtung ausgewählt ist, die Datenumwandlungsvorrichtung die Luminanzdaten unter Verwendung der Umwandlungstabelle zum Umwandeln der Luminanzdaten mit einem vorbestimmten Wert oder mehr in weiße Daten und/oder zum Umwandeln der Luminanzdaten mit einem vorbestimmten Wert oder weniger in schwarze Daten in die Dichtedaten umwandelt.

7. Gerät nach Anspruch 2, wobei die Vielzahl der Umwandlungstabellen zwei Arten von Tabellen für die Fotografie-Betriebsart und eine Art von Tabelle für die Zeichen/Fotografie-Betriebsart enthält.

8. Gerät nach Anspruch 7, wobei sich in den drei Arten von Umwandlungstabellen die ausgegebenen Dichtedaten für eingegebene Luminanzdaten jeweils unterscheiden.

9. Gerät nach Anspruch 7, wobei ein dynamischer Bereich der Umwandlungstabelle für die Zeichen/Fotografie-Betriebsart enger ist als der der Umwandlungstabelle für die Fotografie-Betriebsart.

**Revendications**

1. Appareil de traitement d'images comprenant: des moyens (203, 1305) de conversion de données pour convertir des données de luminance d'une image en données de densité;

    des moyens (701, 1304) de sélection de mode pour sélectionner un mode de photographie ou un mode de caractère/photographie;

    des moyens de correction (204, 1306) pour corriger les données de densité sur la base du mode sélectionné par les moyens de sélection; et

    des moyens de traitement (205, 1307) qui comportent des moyens de mise sous forme binaire pour mettre sous forme binaire les données de densité corrigées sur la base d'une valeur de seuil prédéterminée et des moyens pour corriger les données d'erreur qui sont générées lors de la mise sous forme binaire;

caractérisé en ce que, lorsque le mode de caractère/photographie est sélectionné par lesdits moyens de sélection, lesdits moyens de correction convertissent une pluralité de niveaux de données de densité pour une partie de faible densité dans les données de densité en provenance desdits moyens de conversion de données, en données blanches de densité plus faible et/ou convertissent une pluralité de niveaux de données de densité pour une partie de densité élevée dans lesdites données de densité, en données noires de densité plus élevée.

2. Appareil selon la revendication 1, comportant une pluralité de tables de conversion pour convertir les données de luminance en données de densité.

3. Appareil selon l'une des revendications 1 et 2, comportant en outre des moyens de codage pour coder les données binaires en provenance des moyens de traitement et des moyens de transmission pour transmettre les données codées.

4. Appareil selon l'une quelconque des revendications précédentes, dans lequel lesdits moyens de sélection sont constitués par un commutateur manuel pour sélectionner le mode de photographie ou le mode de caractère/photographie.

5. Appareil selon l'une quelconque des revendications précédentes, dans lequel lesdits moyens de sélection comportent des moyens pour discriminer si un original d'entrée est une photographie originale ou un original dans lequel existent des caractères et une photographie ou des photographies mélangées, et les moyens de sélection sélectionnent soit le mode de photographie, soit le mode de caractère/photographie, en fonction du résultat de la discrimination.

6. Appareil selon la revendication 2, dans lequel, lorsque le mode de caractère/photographie est sélectionné par les moyens de sélection, les moyens de conversion de données convertissent les données de luminance en données de densité en utilisant la table de conversion pour convertir les données de luminance d'une valeur prédéterminée ou davantage, en données blanches et/ou pour convertir les données de luminance d'une valeur prédéterminée ou moins, en données noires.

7. Appareil selon la revendication 2, dans lequel ladite pluralité de tables de conversion comportent deux types de tables pour le mode de photographie et un type de table pour le mode de caractère/photographie.

8. Appareil selon la revendication 7, dans lequel dans les trois types de tables de conversion, les données de densité de sortie diffèrent des données de luminance d'entrée, respectivement.

9. Appareil selon la revendication 7, dans lequel la plage dynamique de la table de conversion pour le mode de caractère/photographie est plus étroite que celle de la table de conversion pour le mode de photographie.

# FIG. 1

| INPUT SENSOR | READ UNIT | RECORD UNIT | OPERATION DISPLAY UNIT | CODING/ DECODING UNIT |
|---|---|---|---|---|
| 101 | 102 | 103 | 104 | 105 |

SYSTEM BUS 100

| CPU | RAM | ROM | MODEM | NCU |
|---|---|---|---|---|
| 106 | 107 | 108 | 109 | 110 |

110a

TEL 111

# FIG. 2

```
        ↓
   ┌─────────────────┐  ⟋201
   │  A/D CONVERTER  │
   └─────────────────┘
        ↓
   ┌─────────────────┐  ⟋202
   │ IMAGE SIGNAL    │
   │ CORRECTION      │
   │ CKT             │
   └─────────────────┘
        ↓
   ┌─────────────────┐  ⟋203
   │ LUMINANCE/      │
   │ DENSITY         │
   │ CONVERSION CKT  │
   └─────────────────┘
        ↓
   ┌─────────────────┐  ⟋204
   │ DENSITY         │
   │ CORRECTION      │
   │ CKT             │
   └─────────────────┘
        ↓
   ┌─────────────────┐  ⟋205
   │ BINARIZATION    │
   │ PROC UNIT       │
   └─────────────────┘
```

# FIG. 3

INPUT DATA

| A5 | D5 |
| A4 | D4 |
| A3 | D3 |
| A2 | D2 |
| A1 | D1 |
| A0 | D0 |

OUTPUT DATA

15

## FIG. 4

| L | D | L | D | L | D |
|---|---|---|---|---|---|
| 0 | 63 | 26 | 13 | 52 | 2 |
| 1 | 52 | 27 | 12 | 53 | 2 |
| 2 | 46 | 28 | 11 | 54 | 2 |
| 3 | 42 | 29 | 11 | 55 | 2 |
| 4 | 38 | 30 | 10 | 56 | 1 |
| 5 | 35 | 31 | 10 | 57 | 1 |
| 6 | 33 | 32 | 10 | 58 | 1 |
| 7 | 31 | 33 | 9 | 59 | 0 |
| 8 | 29 | 34 | 9 | 60 | 0 |
| 9 | 28 | 35 | 9 | 61 | 0 |
| 10 | 26 | 36 | 8 | 62 | 0 |
| 11 | 25 | 37 | 8 | 63 | 0 |
| 12 | 24 | 38 | 7 | | |
| 13 | 23 | 39 | 7 | | |
| 14 | 21 | 40 | 7 | | |
| 15 | 21 | 41 | 6 | | |
| 16 | 20 | 42 | 6 | | |
| 17 | 19 | 43 | 6 | | |
| 18 | 18 | 44 | 5 | | |
| 19 | 17 | 45 | 5 | | |
| 20 | 16 | 46 | 5 | | |
| 21 | 16 | 47 | 4 | | |
| 22 | 15 | 48 | 4 | | |
| 23 | 14 | 49 | 4 | | |
| 24 | 14 | 50 | 3 | | |
| 25 | 13 | 51 | 3 | | |

L : LUMINANCE
D : DENSITY

## FIG. 5

CNT — A6

INPUT DATA { A5 A4 A3 A2 A1 A0 }   { D5 D4 D3 D2 D1 D0 } OUTPUT DATA

# FIG. 6

| IN | OUT 1 | OUT 2 | IN | OUT 1 | OUT 2 | IN | OUT 1 | OUT 2 |
|----|-------|-------|----|-------|-------|----|-------|-------|
| 0 | 0 | 0 | 26 | 26 | 26 | 52 | 52 | 63 |
| 1 | 1 | 0 | 27 | 27 | 27 | 53 | 53 | 63 |
| 2 | 2 | 0 | 28 | 28 | 28 | 54 | 54 | 63 |
| 3 | 3 | 0 | 29 | 29 | 29 | 55 | 55 | 63 |
| 4 | 4 | 0 | 30 | 30 | 30 | 56 | 56 | 63 |
| 5 | 5 | 0 | 31 | 31 | 31 | 57 | 57 | 63 |
| 6 | 6 | 6 | 32 | 32 | 32 | 58 | 58 | 63 |
| 7 | 7 | 7 | 33 | 33 | 33 | 59 | 59 | 63 |
| 8 | 8 | 8 | 34 | 34 | 34 | 60 | 60 | 63 |
| 9 | 9 | 9 | 35 | 35 | 63 | 61 | 61 | 63 |
| 10 | 10 | 10 | 36 | 36 | 63 | 62 | 62 | 63 |
| 11 | 11 | 11 | 37 | 37 | 63 | 63 | 63 | 63 |
| 12 | 12 | 12 | 38 | 38 | 63 | | | |
| 13 | 13 | 13 | 39 | 39 | 63 | | | |
| 14 | 14 | 14 | 40 | 40 | 63 | | | |
| 15 | 15 | 15 | 41 | 41 | 63 | | | |
| 16 | 16 | 16 | 42 | 42 | 63 | | | |
| 17 | 17 | 17 | 43 | 43 | 63 | | | |
| 18 | 18 | 18 | 44 | 44 | 63 | | | |
| 19 | 19 | 19 | 45 | 45 | 63 | | | |
| 20 | 20 | 20 | 46 | 46 | 63 | | | |
| 21 | 21 | 21 | 47 | 47 | 63 | | | |
| 22 | 22 | 22 | 48 | 48 | 63 | | | |
| 23 | 23 | 23 | 49 | 49 | 63 | | | |
| 24 | 24 | 24 | 50 | 50 | 63 | | | |
| 25 | 25 | 25 | 51 | 51 | 63 | | | |

601, 602

IN : INPUT
OUT 1 : OUTPUT 1 ( PHOTOGRAPH )
OUT 2 : OUTPUT 2 ( PHOTOGRAPH, CHARACTER )

17

# FIG. 7

703 ○ PHOTOGRAPH MODE

702 ○ CHARACTER, PHOTOGRAPH MODE

701 ▭

STOP ▭

704 START ▭

| 1 | 2 | 3 |
| 4 | 5 | 6 |
| 7 | 8 | 9 |
| # | 0 | * |

# FIG. 8

OUTPUT

CHARACTER, PHOTOGRAPH MODE

PHOTOGRAPH MODE

63

35

5

0  5    35    63    INPUT

## FIG. 9

```
                    ( START )——S01
                        │
                        ▼
    ┌──────────────────◇◇◇◇◇◇——S02          YES
    │            PHOTOGRAPH MODE ? ──────────────────┐
    │                    │◇◇                          │
    │                   NO                            │
    │                    │                            │
    │                    ▼                            │
    │            ◇◇◇◇◇◇◇◇◇◇——S05                       │
   NO         CHARACTER,                              │
    ├────────  PHOTOGRAPH MODE                        │
    │              ?                                  │
    │            ◇◇◇◇◇◇◇◇◇◇                            │
    │                    │                            │
    │                   YES        S06                │           S03
    │        ┌─────────────────────┐      ┌─────────────────────┐
    │        │ TURN ON "CHARACTER,  │      │ TURN ON "PHOTOGRAPH" │
    │        │  PHOTOGRAPH" LED     │      │  LED                 │
    │        └─────────────────────┘      └─────────────────────┘
    │  S07─┐          │                            │
    │      └──┌─────────────────────┐    ┌─────────────────────┐
    │         │      CNT = 1         │    │      CNT = 0         │
    │         └─────────────────────┘    └─────────────────────┘
    │                    │                            │  ──S04
    │                    ▼◄───────────────────────────┘
    │            ◇◇◇◇◇◇◇◇◇◇——S08
   NO         "START"
    ├────────  KEY APPLIED
    │              ?
    │            ◇◇◇◇◇◇◇◇◇◇
    │                    │
    │                   YES
    │                    ▼
    │        ┌─────────────────────┐——S09
    │        │  EXECUTE IMAGE PROC  │
    │        └─────────────────────┘
    │                    │
   NO                    ▼
    └────────◇◇◇◇◇◇◇◇◇◇◇◇◇◇
             IMAGE PROC END ?
             ◇◇◇◇◇◇◇◇◇◇◇◇◇◇
                  │      S10
                 YES
                  ▼
             ( STOP )——S11
```

## FIG. 10

EP 0 392 781 B1

## FIG. 11

## FIG. 12A

## FIG. 12B

## FIG. 12C

21

FIG. 13

## FIG. 14

A/D CONVERTER ⟋1401

IMAGE SIGNAL
CORRECTION CKT ⟋1402

## FIG. 15

( IMAGE PROC )

READ ORIGINAL DOCUMENT ⟋S20

DISCRIMINATE ORIGINAL
DOCUMENT ⟋S21

SELECT DENSITY
CORRECTION TABLE ⟋S22

READ ORIGINAL DOCUMENT ⟋S23

EXECUTE BINARIZATION
PROC ⟋S24

( END )

EP 0 392 781 B1

# FIG. 16

ORIGINAL DOCUMENT
DISCRIMINATION PROC

S31 — INITIALIZE PARAMETER

S32 — $f = \max(a, b, c, d, x) - \min(a, b, c, d, x)$

$f \geq k$ ?  — NO
S33

YES

S34 — $M = M + 1$

S35 — $P = P + 1$

ORIGINAL
DOCUMENT SCAN
END ?  — NO
S36

YES

S37 — $P - \alpha M \geq h$ ?  — NO

YES

S38 — EXECUTE PHOTOGRAPH
ORIGINAL DOCUMENT MODE

S39 — EXECUTE CHARACTER,
PHOTOGRAPH ORIGINAL
DOCUMENT MODE

END

# FIG. 17

| a | | b |
|---|---|---|
| | x | |
| c | | d |

x: OBJECTIVE
PIXEL

24

## FIG. 18

A/D CONVERTER — 1801

IMAGE SIGNAL CORRECTION CKT — 1802

DATA CONVERSION CKT — 1803

BINARIZATION PROC UNIT — 1804

## FIG. 19

SELECTION SIGNAL (DRK1~DRK2)

DRK2 — A7

DRK1 — A6

INPUT DATA (A0 ~A5)

A5
A4
A3
A2
A1
A0

D5
D4
D3
D2
D1
D0

OUTPUT DATA (D0 ~D5)

25

# FIG. 20

| LUMI-NANCE | DENSITY | | | LUMI-NANCE | DENSITY | | | LUMI-NANCE | DENSITY | | |
|---|---|---|---|---|---|---|---|---|---|---|---|
| | N | D | A | | N | D | A | | N | D | A |
| 0 | 63 | 63 | 63 | 27 | 15 | 24 | 45 | 54 | 0 | 0 | 0 |
| 1 | 63 | 63 | 63 | 28 | 14 | 23 | 43 | 55 | 0 | 0 | 0 |
| 2 | 63 | 63 | 63 | 29 | 14 | 21 | 38 | 56 | 0 | 0 | 0 |
| 3 | 63 | 63 | 63 | 30 | 13 | 20 | 34 | 57 | 0 | 0 | 0 |
| 4 | 58 | 63 | 63 | 31 | 12 | 19 | 30 | 58 | 0 | 0 | 0 |
| 5 | 53 | 63 | 63 | 32 | 11 | 17 | 26 | 59 | 0 | 0 | 0 |
| 6 | 50 | 63 | 63 | 33 | 11 | 16 | 24 | 60 | 0 | 0 | 0 |
| 7 | 45 | 62 | 63 | 34 | 10 | 14 | 22 | 61 | 0 | 0 | 0 |
| 8 | 40 | 61 | 63 | 35 | 10 | 13 | 20 | 62 | 0 | 0 | 0 |
| 9 | 36 | 60 | 63 | 36 | 9 | 12 | 18 | 63 | 0 | 0 | 0 |
| 10 | 34 | 59 | 62 | 37 | 9 | 12 | 15 | | | | |
| 11 | 31 | 58 | 62 | 38 | 8 | 10 | 13 | | | | |
| 12 | 29 | 56 | 61 | 39 | 8 | 9 | 11 | | | | |
| 13 | 27 | 54 | 61 | 40 | 7 | 8 | 10 | | | | |
| 14 | 26 | 53 | 60 | 41 | 7 | 8 | 9 | | | | |
| 15 | 25 | 52 | 60 | 42 | 7 | 7 | 8 | | | | |
| 16 | 24 | 50 | 60 | 43 | 6 | 6 | 8 | | | | |
| 17 | 23 | 48 | 59 | 44 | 6 | 6 | 7 | | | | |
| 18 | 22 | 45 | 58 | 45 | 6 | 6 | 7 | | | | |
| 19 | 21 | 43 | 57 | 46 | 5 | 5 | 6 | | | | |
| 20 | 20 | 41 | 56 | 47 | 5 | 5 | 6 | | | | |
| 21 | 19 | 38 | 55 | 48 | 5 | 5 | 6 | | | | |
| 22 | 18 | 35 | 54 | 49 | 4 | 4 | 5 | | | | |
| 23 | 17 | 33 | 52 | 50 | 4 | 4 | 5 | | | | |
| 24 | 16 | 31 | 51 | 51 | 3 | 3 | 0 | | | | |
| 25 | 16 | 29 | 49 | 52 | 2 | 2 | 0 | | | | |
| 26 | 15 | 26 | 48 | 53 | 0 | 0 | 0 | | | | |

N : NORMAL
D : DENSER
A : AUTO

# FIG. 21

## FIG. 22

```
                    ( START )
                       │
        ┌──────────────┼──────────────────────────────────────────────┐
        │              ▼                                                │
S41 ──◇ "HALF TONE"      YES                                            │
      ◇  KEY APPLIED  ───────────────►┌───────────────────────┐ S42    │
      ◇      ?                        │ TURN ON"HALF TONE"LED  │        │
        │                             └───────────┬───────────┘        │
        │ NO                                      ▼                     │
        ▼                              ◇ "NORMAL"        YES            │
S49 ──◇  "AUTO                         ◇ KEY APPLIED  ──────────────┐   │
  NO  ◇  MODE" KEY                     ◇     ?                      ▼   │
◄─────◇  APPLIED ?                       S43 │              ┌──────────┐│
        │                                    │ NO           │ TURN ON  ││ S45
        │ YES                                ▼              │"NORMAL"LED││
        ▼                            ◇ "DENSER"     NO      └────┬─────┘│
┌───────────────────┐               ◇ KEY APPLIED ────────┐     ▼      │
│ TURN ON"AUTO MODE" │               ◇     ?               │  ┌───────┐│
│ LED               │  S50            │  S44               │  │DRK1=0 ││
└─────────┬─────────┘                 │ YES                │  │DRK2=0 ││
          ▼                           ▼                    │  └───┬───┘│ S46
┌───────────────────┐        ┌──────────────────┐ S47      │      │    │
│  DRK1 = 1         │        │ TURN ON "DENSER" LED│        │      │    │
│  DRK2 = 0         │        └────────┬───────────┘        │      │    │
└───────────────────┘                 ▼                    │      │    │
   S51                        ┌──────────────────┐ S48     │      │    │
                              │  DRK1 = 0        │         │      │    │
                              │  DRK2 = 1        │         │      │    │
                              └────────┬─────────┘         │      │    │
        └─────────────────────────────┼──────────────────◄┘      │    │
                                       ▼                          │    │
              NO           ◇ "START" KEY APPLIED ? ◇ S52          │    │
        ┌────────────────◄◇                       ◇◄─────────────┘    │
        │                       │                                      │
        │                       │ YES                                  │
        │                       ▼                                      │
        │            ┌──────────────────────────┐ S53                 │
        │            │ GENERATE INSTRUCTION FOR  │                     │
        │            │ EXECUTING IMAGE PROC      │                     │
        │            └────────────┬─────────────┘                     │
        │        NO               ▼                                    │
        └───────────◇ IMAGE PROC END ? ◇ S54                          │
                          │                                            │
                          │ YES                                        │
                          ▼                                            │
                    ( STOP ) S55                                       │
```